# EUROPEAN PATENT APPLICATION

(11) **EP 4 557 878 A1**
(43) Date of publication of application: **21.05.2025**
(21) Application number: 23838943.1
(22) Date of filing: 11.07.2023
(51) Int. Cl.: H04W 84/06, H04W 40/24, H04L 41/04

(54) **NETWORK CAPABILITY OPENING METHOD AND APPARATUS, AND NETWORK DEVICE**

(30) Priority: 15.07.2022 CN 202210836183
(71) Applicant: CHINA MOBILE COMMUNICATION CO., LTD RESEARCH INSTITUTE, Beijing 100053 (CN); CHINA MOBILE COMMUNICATIONS GROUP CO., LTD., Beijing 100032 (CN)
(72) Inventor: SHI, Nanxiang, Beijing 100032 (CN); LU, Lu, Beijing 100032 (CN)
(74) Representative: Maiwald GmbH
(86) International application number: PCT/CN2023/106797
(87) International publication number: WO 2024/012452

(57) **Abstract**

Provided are a network capability opening method and apparatus, and a network device, relating to the technical field of communication. The method comprises: acquiring a first network capability and a connection capability of a satellite-related device, wherein the satellite-related device comprises at least one of a satellite access network, a satellite-based service platform and a satellite-based core network; and issuing the first network capability and the connection capability to a ground-based capability opening function entity, and obtaining a second network capability of a satellite-unrelated device issued by the ground-based capability opening function entity, wherein the satellite-unrelated device comprises at least one of a mobile access network, a fixed access network, a ground-based core network and a ground-based service platform.

## Description

### CROSS-REFERENCE TO RELATED APPLICATIONS

The application is based on and claims priority to Chinese Patent Application No. 202210836183.5, filed on July 15, 2022, the entire contents of which are incorporated herein by reference.

### TECHNICAL FIELD

The present disclosure relates to a field of communication technology, and in particular, to a method and an apparatus for network capability exposure, and a network device.

### BACKGROUND

In the related art, capability exposure of a mobile network or capability exposure of a converged network may be achieved via a capability exposure network element, via a plurality of centralized + distributed capability exposure network elements, or via a group of capability exposure network elements under a unified framework. Functions and interfaces of the capability exposure are designed for a ground network and are relatively complex. In a network of fixed, mobile and satellite convergence, compared with a ground fixed/mobile node, computing, storage and connection capabilities of a satellite node are weaker, and a capacity and rate of a satellite-ground communication are lower, and it is difficult to support a complete capability exposure function and a complete capability exposure interface in the related art. In the network of fixed, mobile and satellite convergence, a satellite-based network and a ground-based network usually belong to different operators. Limited by the resource condition of the satellite-based network, it is difficult to unify the capability exposure system and the network capability of the satellite-based network and the capability exposure system and the network capability of the ground-based network, so there is no solution involving the capability exposure of the network of fixed, mobile and satellite convergence.

### SUMMARY

The objective of the present disclosure is to provide a method and an apparatus for network capability exposure, and a network device to realize capability exposure of a network of fixed, mobile and satellite convergence.

To achieve the above objective, the embodiments of the present disclosure provide a method for network capability exposure, applied to a satellite-based capability exposure function entity, including:
obtaining a first network capability and a connection capability of a satellite-related device, in which the satellite-related device includes at least one of a satellite access network, a satellite-based service platform or a satellite-based core network; and
publishing the first network capability and the connection capability to a ground-based capability exposure function entity, and obtaining a second network capability of a satellite-independent device published by the ground-based capability exposure function entity, in which the satellite-independent device includes at least one of a mobile access network, a fixed access network, a ground-based core network or a ground-based service platform.

Optionally, the satellite-based capability exposure function entity is deployed on a target satellite, in which the target satellite is determined based on capability parameters of a plurality of satellites in a target area.

Optionally, the target satellite is determined based on the capability parameter of the plurality of satellites in the target area by:
each of the plurality of satellites in the target area determining a voting value according to respective capability parameters; and
the plurality of satellites in the target area interacting with voting values and determining a satellite with a largest voting value as the target satellite.

Optionally, the satellite-based capability exposure function entity assigns a default value to a parameter of a network capability;
and/or,
a message header of the network capability sent by the satellite-based capability exposure function entity only carries a request method, an application programming interface (API) name, and a host name.

Optionally, after obtaining the first network capability and the connection capability of the satellite-related device, the method further includes:
publishing the first network capability and the connection capability to a third party application device;
   and/or,
receiving location information and a connection capability sent by a multi-connection terminal, and sending the location information and the connection capability to the third party application device.

Optionally, after obtaining the first network capability and the connection capability of the satellite-related device, the method further includes:
receiving an invoking request of the first network capability sent by a third party application device; and
in the case of determining that the satellite-related device and a multi-connection terminal both meet a preset condition according to the invoking request of the first network capability, initiating an invocation of the second network capability, and feeding back an invocation response of the first network capability to the third party application device.

Optionally, after obtaining the second network capability of the satellite-independent device published by the ground-based capability exposure function entity, the method further includes:
receiving an invoking request of the second network capability sent by a third party application device; and
in the case of determining that a multi-connection terminal meets a preset condition according to the invoking request of the second network capability, initiating an invocation of the second network capability to the ground-based capability exposure function entity, and feeding back an invoking response of the second network capability to the third party application device.

Optionally, the method further includes:
performing a consistency check on capability information stored on the satellite-based capability exposure function entity and capability information stored on the ground-based capability exposure function entity every a first time period;
in which the capability information includes the first network capability, a connection condition and the second network capability.

Optionally, performing the consistency check on the capability information stored on the satellite-based capability exposure function entity and the capability information stored on the ground-based capability exposure function entity includes:
receiving a consistency check request sent by the ground-based capability exposure function entity, in which the consistency check request carries the capability information stored on the ground-based capability exposure function entity;
determining whether the capability information stored on the ground-based capability exposure function entity is consistent with the capability information stored on the satellite-based capability exposure function entity according to the consistency check request; and
in response to the capability information stored on the ground-based capability exposure function entity being not consistent with the capability information stored on the satellite-based capability exposure function entity, updating stored capability information and feeding back the capability information stored on the satellite-based capability exposure function entity to the ground-based capability exposure function entity.

Optionally, the method further includes:
sending an authentication request to the ground-based capability exposure function entity every a second time period;
   or
receiving an authentication request sent by the ground-based capability exposure function entity and performing an authentication processing on the ground-based capability exposure function entity according to the authentication request.

Optionally, the method further includes:
sending a charging request to the ground-based capability exposure function entity every a third time period;
   or
receiving a charging request sent by the ground-based capability exposure function entity and charging the ground-based capability exposure function entity according to the charging request.

The embodiments of the present disclosure further provide a method for network capability exposure, applied to a ground-based capability exposure function entity, including:
receiving a first network capability and a connection capability of a satellite-related device published by a satellite-based capability exposure function entity, and publishing a second network capability of a satellite-independent device to the satellite-based capability exposure function entity;
in which the satellite-related device includes at least one of a satellite access network, a satellite-based service platform or a satellite-based core network; and the satellite-independent device includes at least one of a mobile access network, a fixed access network, a ground-based core network or a ground-based service platform.

Optionally, the method further includes:
performing a consistency check on capability information stored on the satellite-based capability exposure function entity and capability information stored on the ground-based capability exposure function entity every a first time period;
in which the capability information includes the first network capability, a connection condition and the second network capability.

Optionally, after sending the consistency check request to the satellite-based capability exposure function entity, the method further includes:
receiving capability information stored on the satellite-based capability exposure function entity fed back by the satellite-based capability exposure function entity according to the consistency check request; and
updating the capability information stored on the ground-based capability exposure function entity according to the capability information stored on the satellite-based capability exposure function entity.

Optionally, the method further includes:
sending an authentication request to the satellite-based capability exposure function entity every a second time period;
   or
receiving an authentication request sent by the satellite-based capability exposure function entity and performing an authentication processing on the satellite-based capability exposure function entity according to the authentication request.

Optionally, the method further includes:
sending a charging request to the satellite-based capability exposure function entity every a third time period;
   or
receiving a charging request sent by the satellite-based capability exposure function entity and charging the satellite-based capability exposure function entity according to the charging request.

The embodiments of the present disclosure further provide an apparatus for network capability exposure, applied to a satellite-based capability exposure function entity, including:
an obtaining module, configured to obtain a first network capability and a connection capability of a satellite-related device; in which the satellite-related device includes at least one of a satellite access network, a satellite-based service platform or a satellite-based core network; and
an exposure module, configured to publish the first network capability and the connection capability to a ground-based capability exposure function entity, and obtain a second network capability of a satellite-independent device published by the ground-based capability exposure function entity; in which the satellite-independent device includes at least one of a mobile access network, a fixed access network, a ground-based core network or a ground-based service platform.

The embodiments of the present disclosure further provide an apparatus for network capability exposure, applied to a ground-based capability exposure function entity, including:
an exposure module, configured to receive a first network capability and a connection capability of a satellite-related device published by a satellite-based capability exposure function entity, and publish a second network capability of a satellite-independent device to the satellite-based capability exposure function entity;
in which the satellite-related device includes at least one of a satellite access network, a satellite-based service platform or a satellite-based core network; and the satellite-independent device includes at least one of a mobile access network, a fixed access network, a ground-based core network or a ground-based service platform.

The embodiments of the present disclosure further provide a network device, including a transceiver, a processor, a memory, and a program or an instruction stored on the memory and capable of running on the processor. When the program or the instruction is executed by the processor, steps in the above method for network capability exposure on the satellite-based capability exposure function entity side are implemented, or steps in the above method for network capability exposure on the ground-based capability exposure function entity side are implemented.

The embodiments of the present disclosure further provide a readable storage medium on which a program or an instruction is stored. When the program or the instruction is executed by a processor, steps in the above method for network capability exposure on the satellite-based capability exposure function entity side are implemented, or steps in the above method for network capability exposure on the ground-based capability exposure function entity side are implemented.

The beneficial effect of the above technical solution of the present disclosure are as follows.

In the embodiments of the present disclosure, the satellite-based capability exposure function entity may support the satellite-related device to register a first network capability and a connection capability, and publish the first network capability and the connection capability to the ground-based capability exposure function entity, and obtain a second network capability for a satellite-independent device published by the ground-based capability exposure function entity. Therefore, the support for a heterogeneous capability exposure system is realized, that is, the capability exposure system of the satellite-based network and the capability exposure system of the ground-based network may adopt different capability exposure frameworks, which may adapt to resource difference between the satellite-based network and the ground-based network, and reduce the message overhead between capability exposure systems.

### BRIEF DESCRIPTION OF THE DRAWINGS

FIG. 1 is a schematic diagram of a network framework of fixed, mobile and satellite convergence.
FIG. 2 is a schematic diagram of a function model of a Common API Framework (CAPIF).
FIG. 3 is a schematic diagram of a capability exposure system of a network of fixed, mobile and satellite convergence according to embodiments of the present disclosure.
FIG. 4 is a first flowchart of a method for network capability exposure according to embodiments of the present disclosure.
FIG. 5 is a second flowchart of a method for network capability exposure according to embodiments of the present disclosure.
FIG. 6 is a third flowchart of a method for network capability exposure according to embodiments of the present disclosure.
FIG. 7 is a first block diagram of an apparatus for network capability exposure according to embodiments of the present disclosure.
FIG. 8 is a second block diagram of an apparatus for network capability exposure according to embodiments of the present disclosure.
FIG. 9 is a block diagram of a network device according to embodiments of the present disclosure.

### DETAILED DESCRIPTION

In order to make a technical problem to be solved, technical solutions and advantages in the present disclosure more clear, the present disclosure is described in detail below with reference to the accompanying drawings and the embodiments.

It should be understood that reference throughout this specification to "one embodiment" or "an embodiment" means that a particular feature, structure, or characteristic related to the embodiment is included in at least one embodiment of the present disclosure. The appearances of "in one embodiment" or "in an embodiment" in various places throughout this specification are not necessarily referring to the same embodiment of the present disclosure. Furthermore, the particular feature, structure, or characteristic may be combined in any suitable manner in one or more embodiments.

In various embodiments of the present disclosure, it should be understood that the size of the sequence number of each following process does not imply the order of execution, which shall be determined by its function and internal logic, and should not constitute any limitation on the implementation processes of the embodiments of the present disclosure.

In addition, the term "system" and the term "network" are often used interchangeably throughout the present disclosure.

In the embodiments of the present disclosure, it should be understood that "B corresponding to A" means that B is associated with A and B may be determined according to A. However, it should also be understood that determining B according to A does not mean determining B according to A alone, but that B may also be determined according to A and/or other information.

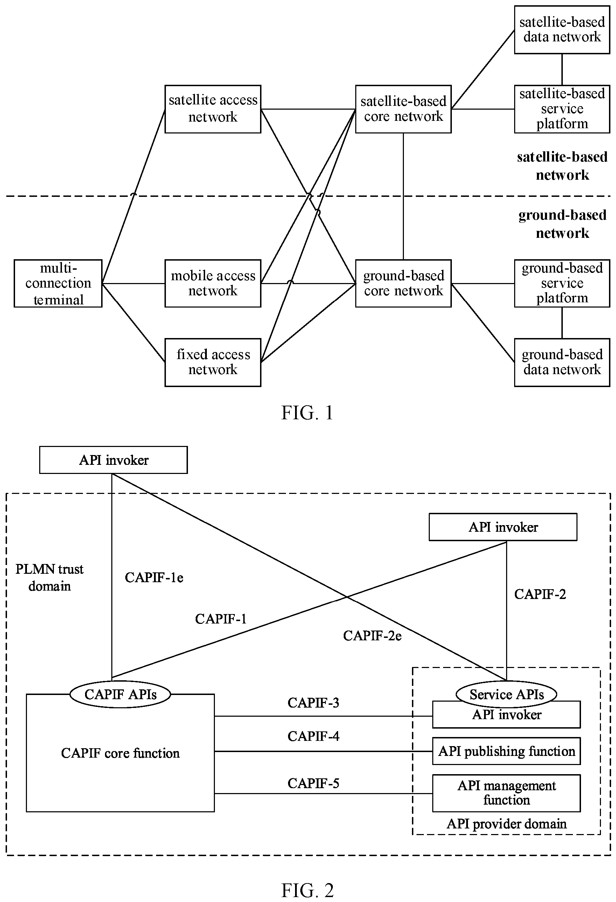

With rapid development of a high throughput satellite communication technology and a low orbit satellite communication technology, communication capabilities a satellite network in terms of capability, rate, delay, reliability, and the like is continuously improved, and the satellite network may complement and cooperate with ground fixed/mobile networks. The network of fixed, mobile and satellite convergence supports providing communication services such as voice, video, message, data, broadcast/multicast, international roaming, and overseas operation, and the like for multi-connection terminal users under one or more access modes of a fixed access, a mobile access, and a satellite access. The network of fixed, mobile and satellite convergence is a space-ground integrated multi-access convergence network, which has become a hot topic in a global communication technology research in recent years, and also a key development direction of the information and communication industry. Furthermore, the network of fixed, mobile and satellite convergence is generally considered to be one of main architectural support technologies of the 5th Generation Mobile Communication Technology (5G) enhanced technology (5G-Advanced or 5G-A) and the 6th Generation Mobile Communication Technology (6G). A network framework of fixed, mobile and satellite convergence (ITU-T YFMSC-frame) defined by the International Telecommunication Union Telecommunication Standardization Sector (ITU-T) is shown in FIG. 1. The framework includes a multi-connection terminal, a fixed access network, a mobile access network, a satellite access network, a ground-based core network, a satellite-based core network, a ground-based service platform, a satellite-based service platform, a ground-based data network and a satellite-based data network.

Capability exposure of a mobile network or capability exposure of a converged network is achieved via a capability exposure function. The capability exposure function is a Network Exposure Function (NEF) defined by the 3rd Generation Partnership Project (3GPP) standard or a Capability Exposure Function (CEF) defined by the ITU-T standard. Taking the 5G mobile network as an example, main functions of its capability exposure system include: supporting exposure to applications via the Application Programming Interface (API) based on the Hyper Text Transfer Protocol (HTTP) or the Hyper Text Transfer Protocol over SecureSocket Layer (HTTPS), supporting an encapsulation and mapping between network information and exposed API parameters, supporting APIs compatible with the 4th Generation Mobile Communication Technology (4G), supporting to connect with 5G network elements such as an Access and Mobility Management Function (AMF), a Session Management Function (SMF), a Unified Data Management (UDM), and a Policy Control Function (PCF) and the like via a service interface, and to perform an invocation of network capabilities such as a network event subscription/notification and a network data configuration, supporting obtaining and save network data; supporting a capability to inform a network event, supporting a session binding function of 5G, and supporting performing a session binding function by using a Binding Support Function (BSF), and to query address information of the PCF.

The capability exposure of the mobile network or the capability exposure of the converged network may be achieved via a capability exposure network element, via a plurality of centralized + distributed capability exposure network elements, or via a group of capability exposure network elements under a unified framework. An embodiment of the unified framework is a Common API Framework (CAPIF) defined by the 3GPP TS 23.222 standard. A function model of the CAPIF is shown in FIG. 2. The CAPIF includes a CAPIF core function, an API exposure function, an API publishing function and an API management function. An API invoker located inside or outside a trust domain of an operator uses a capability of the mobile network or the converged network by invoking an API.

The network capability of the network of fixed, mobile and satellite convergence includes a fixed network capability, a mobile network capability, a satellite network capability, and specific network capabilities of fixed, mobile and satellite convergence. The specific network capabilities include, but are not limited to: (1) a satellite service continuity capability, that is, a capability to maintain continuity of an audio/video service when a handover between satellite access and fixed/mobile access is performed; (2) a satellite handover service quality assurance capability, that is, a capability to maintain a same service quality for the audio/video service before and after the handover when the handover between the satellite access and the fixed/mobile access is performed; (3) a unified charging capability, that is, a capability to generate a unified charging bill when a user uses a plurality of access methods such as the fixed access, the mobile access, the satellite access, and the like. The above network capabilities exist in the fixed access network, the mobile access network, the satellite access network, the ground-based core network, the satellite-based core network, the ground-based service platform, and the satellite-based service platform.

Following problems may exist in realizing capability exposure for the network of fixed, mobile and satellite convergence in the related art.
1. In the related art, the capability and interface of the capability exposure are designed for ground networks and are relatively complex. In the network of fixed, mobile and satellite convergence, compared with a ground fixed/mobile node, computing, storage and connection capabilities of a satellite node are weaker, capacity and rate of a satellite-ground communication are lower, and it is difficult to support a complete capability exposure function and a complete capability exposure interface in the related art.
2. In the related art, a management, publication and exposure mechanisms of the API have been introduced, but a capability exposed to third party applications and a path of capability exposure are still static or quasi-static. The Non-Geostationary Satellite Orbit (NGSO) satellite is introduced to the network of fixed, mobile and satellite convergence. An inter-satellite network connection and a satellite-ground network connection are highly dynamic. A capability exposed to third party applications and a path of capability exposure are changed based on changes of time and space conditions, and it is difficult for the related art to support dynamic capability exposure for the dynamic network topology.
3. In the related art, a management, publication and exposure of a network capability API by one or more operators is supported, but its capability exposure system and network capability API adopt a design method under a unified capability exposure framework. In the network of fixed, mobile and satellite convergence, the satellite-based network and the ground-based network usually belong to different operators. Limited by the resource condition of the satellite-based network, it is difficult to adopt a unified capability exposure framework for the capability exposure system of the satellite-based network and the capability exposure system of the ground-based network and network capability API, and it is difficult for the related art to support the heterogeneous capability exposure system of a plurality of operator networks.

The proposal of the present disclosure is for the network of fixed, mobile and satellite convergence. In view of the above technical problems, a solution corresponding to the network capability exposure is proposed as follows.
1. In the embodiments of the present disclosure, a self-organizing election method is adopted, based on a computing capability, a storage capability, a connection capability and a software capability, a most appropriate satellite node is selected to deploy a satellite-based capability exposure function, deploy a satellite-related exposure capability and simplify an exposure interface. Methods of simplifying the exposure interface include assigning a default value to a parameter of a network capability API, reducing a length of a message header, and on the like.
2. In the embodiments of the present disclosure, the satellite access network, the satellite-based service platform and the satellite-based core network support registering their network capabilities and attached connection conditions to the satellite-based capability exposure function, in which the connection condition is a connection capability at a specified time condition and a specified space condition. That is, based on ephemeris information of the satellite node where the satellite access network is located, the satellite access network provides a time period **[t1,** t2] during which there is the connection condition with the satellite-based capability exposure function, and a geographical location (a longitude interval and a latitude interval) of the satellite node during the time period. The multi-connection terminal reports its Global Navigation Satellite System (GNSS) location and a connection capability (including supported connection types and typical connection rates for each supported connection type) to the satellite-based/ground-based capability exposure function. The support to the dynamic network topology is realized by the above method.
3. In the embodiments of the present disclosure, the satellite-based capability exposure function and the ground-based capability exposure function support performing bidirectional capability invoking between them via an "inter-network capability exposure interface", and support a bidirectional capability publication mechanism, a periodic capability authentication mechanism, and a periodic capability charging mechanism. The support for the heterogeneous capability exposure system is realized by the above method.

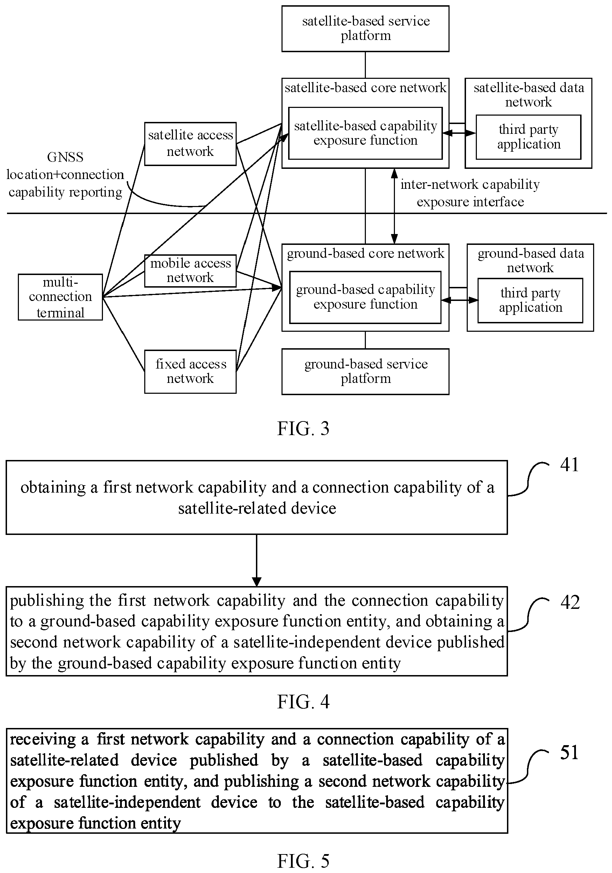

The solutions of the embodiments of the present disclosure are elaborated below in conjunction with the accompanying drawings, and the embodiments of the present disclosure provide a capability exposure system for the network of fixed, mobile and satellite convergence, as shown in FIG. 3.

The capability exposure system for the network of fixed, mobile and satellite convergence includes logical units such as a multi-connection terminal, a fixed access network, a mobile access network, a satellite access network, a ground-based core network, a satellite-based core network, a ground-based service platform, a satellite-based service platform, a ground-based data network, a satellite-based data network and the like. A ground-based capability exposure function is deployed on the ground-based core network, the satellite-based capability exposure function is deployed on the space-based core network, and a third party application is deployed on both the ground-based data network and the space-based data network. The main functions of each logical unit are described as follows.

The multi-connection terminal: supporting reporting a GNSS location of the terminal to the satellite-based/ground-based capability exposure function, and supporting reporting a connection capability of the terminal (including supported connection types: fixed/mobile/satellite, and typical connection rates for each supported connection type) to the satellite-based/ground-based capability exposure function.

The fixed, mobile and satellite access network: the satellite access network supports registering its network capability and an attached connection condition to the satellite-based capability exposure function, in which the connection condition is a connection capability at the specified time condition and the specified space condition. That is, based on ephemeris information of the satellite node where the satellite access network is located, the satellite access network provides a time period [t1, t2] during which there is the connection condition with the satellite-based capability exposure function, and a geographical location (a longitude interval and a latitude interval) of the satellite node during the time period. The fixed access network and the mobile access network support registering their network capabilities to the ground-based capability exposure function.

The ground-based core network and the satellite-based core network: the satellite-based core network is deployed with the satellite-based capability exposure function having a satellite-related exposure capability and a simplified exposure interface. The ground-based core network is deployed with the ground-based capability exposure function having a satellite-independent exposure capability and a standard exposure interface. The satellite-based core network supports registering its network capability and an attached connection condition to the satellite-based capability exposure function, in which the connection condition is the connection capability at the specified time condition and the specified space condition (refer to the above). The ground-based core network supports registering its network capability to the ground-based capability exposure function. The satellite-based capability exposure function and the ground-based capability exposure function support bidirectional capability invoking via an "inter-network capability exposure interface".

The ground-based service platform and the satellite-based service platform: the satellite-based service platform supports registering its network capability and an attached connection condition to the satellite-based capability exposure function, in which the connection condition is the connection capability at the specified time condition and the specified space condition (refer to the above). The ground-based service platform supports registering its network capability to the ground-based capability exposure function.

The ground-based data network and the satellite-based data network: the third party application is deployed on the ground-based data network or satellite-based data network as needed, and selects the satellite-based capability exposure function or the ground-based capability exposure function to invoke the capability of the convergence network.

As shown in FIG. 4, the embodiments of the present disclosure provide a method for network capability exposure, applied to a satellite-based capability exposure function entity, including steps 41 to 42.

**At** step 41, a first network capability and a connection capability of a satellite-related device are obtained; in which the satellite-related device includes at least one of a satellite access network, a satellite-based service platform or a satellite-based core network.

At step 42, the first network capability and the connection capability are published to a ground-based capability exposure function entity, and a second network capability of a satellite-independent device published by the ground-based capability exposure function entity is obtained; in which the satellite-independent device includes at least one of a mobile access network, a fixed access network, a ground-based core network or a ground-based service platform.

Optionally, the satellite-based capability exposure function entity may be deployed on a satellite-based core network, and may be deployed with a satellite-related exposure capability and a simplified exposure interface, and may support invoking a ground-based network capability via an "inter-network capability exposure interface". The satellite-based capability exposure function manages, publishes, and exposes network capabilities that are registered locally and a network capability published by the ground-based capability exposure function.

Optionally, when a satellite access network, a satellite-based service platform and a satellite-based core network register their network capabilities that may be exposed to the satellite-based capability exposure function entity, attached connection conditions of the exposure network capabilities are needed to provide. A connection condition is a connection capability at a specified time condition and a specified space condition. That is, based on ephemeris information of a satellite node where the satellite access network, the satellite-based service platform and the satellite-based core network are located, the satellite access network, the satellite-based service platform and the satellite-based core network provide a time period [t1, t2] during which there is the connection condition with the satellite-based capability exposure function, and a geographical location (a longitude interval and a latitude interval) of the satellite node during the time period. Considering that current satellite ephemeris information already includes a real-time trajectory information of each satellite node, whether there is a communication connection capability between the satellite nodes or not may be calculated using the related art during any time period, therefore, it is feasible to provide the connection condition.

Optionally, in addition to an existing audio/video capability API, a message capability API, a data capability API, a network slicing capability API, an edge computing capability API and various composite capability APIs, the first network capability exposed by the satellite-based capability exposure function entity further includes specific capabilities of the network of fixed, mobile, and satellite convergence, such as: a satellite service continuity capability, that is, a capability to maintain continuity of an audio/video service when a handover between satellite access and fixed/mobile access is performed; a satellite handover service quality assurance capability, that is, a capability to maintain a same service quality for the audio/video service before and after the handover when the handover between the satellite access and the fixed/mobile access is performed; a unified charging capability, that is, a capability to generate a unified charging bill when a user uses a plurality of access methods such as the fixed access, the mobile access, the satellite access.

In the above solution, the satellite-based capability exposure function entity may support the satellite-related device to register the first network capability and the connection capability, and publish the first network capability and the connection capability to the ground-based capability exposure function entity, and obtain the second network capability of the satellite-independent device published by the ground-based capability exposure function entity. Therefore, the support for a heterogeneous capability exposure system is realized, that is, the capability exposure system of the satellite-based network and the capability exposure system of the ground-based network may adopt different capability exposure frameworks, which may adapt to the resource difference between the satellite-based network and the ground-based network, and reduce the message overhead between capability exposure systems.

Optionally, the satellite-based capability exposure function entity is deployed on a target satellite. The target satellite is determined based on capability parameters of a plurality of satellites in a target area.

The target satellite is determined based on the capability parameters of the plurality of satellites in the target area by:
each of the plurality of satellites in the target area determining a voting value according to respective capability parameters; and
the plurality of satellites in the target area interacting with voting values and determining a satellite with a largest voting value as the target satellite.

Specifically, limited by a communication capability and communication resources of a single satellite node, the satellite-based core network is usually deployed in a plurality of satellite nodes, which form a simplified core network in a distributed networking method. When the satellite-based capability exposure function is needed to be deployed, a plurality of satellite nodes in a region (a specific longitude interval and a specific latitude interval) adopt a self-organizing election method to select a most appropriate satellite node to deploy the satellite-based capability exposure function. The election method is:
setting election parameters: including a computing capability parameter Comp, a storage capability parameter Sto, a connection capability parameter Con, a software capability parameter Soft, and the like, and each satellite node evaluates a value of each election parameter VComp, VSto, VCon, VSoft;
setting a normalized weight for each election parameter: WComp, WSto, WCon, WSoft, and WComp + WSto + WCon + WSoft = 1;
each satellite node using a parameter weighting algorithm to calculate its own weighted capability score V = VComp*WComp + VSto*WSto + VCon*WCon + VSoft*WSoft, and interacting weighted capability scores between satellite nodes in the region based on a handshake protocol; and
electing the satellite node with a largest weighted capability score in the region to deploy the satellite-based capability exposure function.

Optionally, the satellite-based capability exposure function entity assigns a default value to a parameter of a network capability; and/or, a message header of the network capability sent by the satellite-based capability exposure function entity only carries a request method, an API name, and a host name.

**In** the embodiment, the satellite-based capability exposure function entity reduces a length of a message of a network capability API by simplifying an exposure interface.

Specifically, limited by the communication capability and the communication resources of a single satellite node, the satellite-based capability exposure function deploys a simplified exposure interface. Methods of simplifying the exposure interface includes but are not limited to assigning the default value to the parameter of the network capability API, reducing the length of the message header, and the like.

For example, assigning the default value to the parameter of the network capability API: the network capability API usually including a plurality of configurable parameters; and simplifying the exposure interface assigns default values to as many parameters as possible and does not pass them in the network capability API to reduce the length of the message of the network capability API, as shown in Table 1 and Table 2.

**Table 1 an initiating multi-party call API of a standard exposure interface**

| Parameter | Type | Length | Description |
|---|---|---|---|
| APPID | String | 32 | application identification |
| sponsor | String | 64 | a number creates a multi-party call |
| chairman | String | 20 | host number of a multi-party call in MSISDN format |
| participants | String[] | - | call number of a multi-party call in MSISDN format |
| display | String | 64 | external display number |

**Table 2 an initiating multi-party call API of a simplified exposure interface**

| Parameter | Type | Length | Description |
|---|---|---|---|
| APPID | String | 32 | application identification |
| participants | String[] | - | call number of a multi-party call in MSISDN format |

For another example, reducing the length of the message header: the message header of the network capability API usually includes information such as the request method, the API name, the Host name, a Content-Type, a Content-Length, an encoding format, authentication information, and the like. Simplifying the exposure interface only reserves necessary information, such as the request method, the API name, the Host name, and the like. Other information may be configured by default or not carried and not transmitted in the message to reduce the length of the message header. Examples are as follows.

A message header of the initiating multi-party call API of the standard exposure interface is shown below.
POST /appcall/v1/MakeMultipartiesCall HTTP/1.1
Host: 10.137.73.227:1302
Content-Type: application/json;charset=utf-8
Content-Length: XXX
Accept: application/json
Authorization: Bearer 2ZQsweeFFJS1zCsicMspWD

A message header of initiating multi-party call API of a simplified exposure interface is shown below.
POST /appcall/v1/MakeMultipartiesCall HTTP/1.1
Host: 10.137.73.227:1302

Optionally, after obtaining the first network capability and the connection capability of the satellite-related device, the method further includes: publishing the first network capability and the connection capability to a third party application device; and/or, receiving location information and a connection capability sent by a multi-connection terminal, and sending the location information and the connection capability to the third party application device.

Optionally, after obtaining the first network capability and the connection capability of the satellite-related device, the method further includes:
receiving an invoking request of the first network capability sent by a third party application device; and
in the case of determining that the satellite-related device and a multi-connection terminal both meet a preset condition according to the invoking request of the first network capability, initiating an invocation of the second network capability, and feeding back an invoking response of the first network capability to the third party application device.

Specifically, when the satellite-based capability exposure function receives a request from a third party application, the satellite-based capability exposure function first checks a connection condition of a related network element, and determines whether the network capability of the satellite access network/satellite-based service platform/satellite-based core network is capable to be invoked. Then the satellite-based capability exposure function checks GNSS location and the connection capability reported by the multi-connection terminal, and determines whether the satellite access network/satellite-based service platform/satellite-based core network is capable to provide services for the specified multi-connection terminal. When these two conditions are met, the satellite-based capability exposure function determines a capability invoking path according to the ephemeris information, and initiates the call request of the network capability of the satellite access network/satellite-based service platform/satellite-based core network. This method may improve the success rate of network capability invoking in a satellite networking environment.

Optionally, after obtaining the second network capability of the satellite-independent device published by the ground-based capability exposure function entity, the method further includes:
receiving an invoking request of the second network capability sent by a third party application device; and
**in** the case of determining that a multi-connection terminal meets a preset condition according to the call request of the second network capability, initiating an invocation of the second network capability to the ground-based capability exposure function entity, and feeding back an invoking response of the second network capability to the third party application device.

Specifically, the third party application invokes the ground-based network capability via the satellite-based capability exposure function. The satellite-based capability exposure function checks the GNSS location and the connection capability reported by the multi-connection terminal. After the preset condition is met, the satellite-based capability exposure function invokes the ground-based network capability via the ground-based capability exposure function. The satellite-based capability exposure function returns a capability invoking response to the third party application.

The satellite-based capability exposure function and the ground-based capability exposure function support the bidirectional capability invoking between them, that is, each of them supports invoking the network capability of the other via the "inter-network capability exposure interface", and support a bidirectional capability publication mechanism, a periodic capability authentication mechanism, and a periodic capability charging mechanism.

Optionally, the method further includes:
performing a consistency check on capability information stored on the satellite-based capability exposure function entity and capability information stored on the ground-based capability exposure function entity every a first time period;
in which the capability information includes the first network capability, the connection condition and the second network capability.

Optionally, performing the consistency check on the capability information stored on the satellite-based capability exposure function entity and the capability information stored on the ground-based capability exposure function entity includes:
receiving a consistency check request sent by the ground-based capability exposure function entity, in which the consistency check request carries the capability information stored on the ground-based capability exposure function entity;
determining whether the capability information stored on the ground-based capability exposure function entity is consistent with the capability information stored on the satellite-based capability exposure function entity according to the consistency check request; and
in response to the capability information stored on the ground-based capability exposure function entity being not consistent with the capability information stored on the satellite-based capability exposure function entity, updating stored capability information and feeding back the capability information stored on the satellite-based capability exposure function entity to the ground-based capability exposure function entity.

Specifically, different from a capability publication for the third party application, a capability publication between capability exposure functions provides all information of the network capability API to the other, including a protocol requirement, an interface requirement, an authentication requirement, a charging requirement, and a conflict nesting relationship. Upon receiving a new network capability registration, the satellite-based capability exposure function immediately publishes the network capability API to the ground-based capability exposure function, and the connection condition is attached. Similarly, upon receiving a new network capability registration, the ground-based capability exposure function immediately publishes the network capability API to the satellite-based capability exposure function, and the connection condition is attached.

In order to ensure the consistency of the same network capability API in different capability exposure functions, the satellite-based capability exposure function and the ground-based capability exposure function are calibrated once every configurable T1 time, that is, the consistency check is performed on all network capability APIs exposed between networks and attached connection conditions. In the consistency check, the ground-based capability exposure function initiates the consistency check request and carries all the network capability API information that is saved and exposed between the networks. The satellite-based capability exposure function only responds to inconsistent network capability API information, and a response message carries the relevant network capability API information saved by the satellite-based capability exposure function. After interaction between the ground-based capability exposure function and the satellite-based capability exposure function, the inconsistent network capability API information is updated.

Optionally, the method further includes:
sending an authentication request to the ground-based capability exposure function entity every a second time period;
   or
receiving an authentication request sent by the ground-based capability exposure function entity and performing an authentication processing on the ground-based capability exposure function entity according to the authentication request.

Specifically, a trust level between the capability exposure functions is higher than a trust level between the capability exposure function and the third party application. In order to reduce the authentication overhead, the periodic capability authentication mechanism is adopted between the capability exposure functions. A periodic capability authentication message is designed as follows:
header 1: an authentication token,
header 2: a number of published exposure network capability APIs between the networks,
header 3: a number of currently valid exposure network capability APIs between the networks, and
header 4: a time point for a next capability authentication.

The satellite-based capability exposure function and the ground-based capability exposure function perform one periodic capability authentication every a configurable T2 time. In addition to the periodic capability authentication, other messages of the inter-network capability exposure interface do not carry any authentication information other than for authentication information for the third party application.

Optionally, the method further includes:
sending a charging request to the ground-based capability exposure function entity every a third time period;
   or
receiving a charging request sent by the ground-based capability exposure function entity and charging the ground-based capability exposure function entity according to the charging request.

Specifically, different from capability charging for the third party application, capability charging between capability exposure functions does not require a real-time charging. In order to reduce the charging overhead, the periodic capability charging mechanism is used between the capability exposure functions. The periodic capability charging message is designed as follows:
header 1: a number of currently valid exposure network capability APIs between the networks,
header 2: a list of network capability APIs corresponding to the header 1,
header 3: a list of invocation counts corresponding to the network capability APIs in the header 1,
header 4: rate information for the network capability APIs corresponding to the header 1; and
header 5: a time point for a next capability charging.

The satellite-based capability exposure function and the ground-based capability exposure function perform one periodic capability charging every a configurable T3 time. In addition to the periodic capability charging, other messages of the inter-network capability exposure interface do not carry any charging information other than for charging information for the third party application.

As shown in FIG. 5, the embodiments of the present disclosure further provide a method for network capability exposure, applied to a ground-based capability exposure function entity, including step 51.

**At** step 51, a first network capability and a connection capability of a satellite-related device published by a satellite-based capability exposure function entity are received, and a second network capability of a satellite-independent device is published to the satellite-based capability exposure function entity;
in which the satellite-related device includes at least one of a satellite access network, a satellite-based service platform or a satellite-based core network; and the satellite-independent device includes at least one of a mobile access network, a fixed access network, a ground-based core network or a ground-based service platform.

Optionally, the ground-based capability exposure function is deployed in the ground-based core network, for example, via a method of deploying the satellite-independent exposure capability and the standard exposure interface in the related art. The ground-based capability exposure function may support invoking a satellite-based network capability via an "inter-network capability exposure interface". The ground-based capability exposure function manages, publishes, and exposes network capabilities that are registered locally and published by the satellite-based capability exposure function.

Optionally, the method further includes:
sending a consistency check request to the satellite-based capability exposure function entity every a first time period, in which the consistency check request carries capability information stored on the ground-based capability exposure function entity;
in which the capability information includes the first network capability, a connection condition and the second network capability.

Optionally, after sending the consistency check request to the satellite-based capability exposure function entity, the method further includes:
receiving capability information stored on the satellite-based capability exposure function entity fed back by the satellite-based capability exposure function entity according to the consistency check request; and
updating the capability information stored on the ground-based capability exposure function entity according to the capability information stored on the satellite-based capability exposure function entity.

Optionally, the method further includes:
sending an authentication request to the satellite-based capability exposure function entity every a second time period;
   or
receiving an authentication request sent by the satellite-based capability exposure function entity and performing an authentication processing on the satellite-based capability exposure function entity according to the authentication request.

Optionally, the method further includes:
sending a charging request to the satellite-based capability exposure function entity every a third time period;
   or
receiving a charging request sent by the satellite-based capability exposure function entity and charging the satellite-based capability exposure function entity according to the charging request.

In the embodiments of the present disclosure, the method on the ground-based capability exposure function entity side corresponds to the method on the satellite-based capability exposure function entity side, and the embodiments of the two sides can be referred to each other, which is not described here in order to avoid repetition.

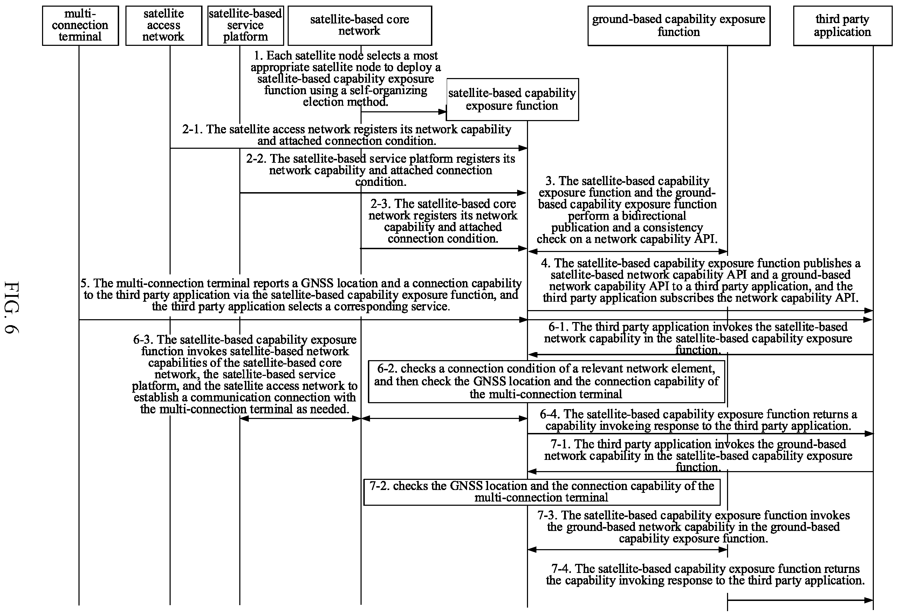

Take an example that a third party application simultaneously invokes both the satellite-related network capability and the ground-based network capability combined with a network system of fixed, mobile and satellite convergence in the embodiments of the present disclosure to illustrate the process of the capability exposure of the network of fixed, mobile and satellite convergence, as shown in FIG. 6, the process includes the following content.

The satellite-based core network is deployed in a plurality of satellite nodes. Each satellite node adopts a self-organizing election method to select a most appropriate satellite node to deploy the satellite-based capability exposure function, and uses a parameter weighting algorithm to calculate its own weighted capability score. A satellite node with the largest weighted capability score in a region is selected to deploy the satellite-based capability exposure function.

The satellite access network, the satellite-based service platform, the satellite-based core network register their network capabilities and attached connection conditions to the satellite-based capability exposure function. The connection condition is a connection capability at a specified time condition and a specified space condition, including a time period [t1, t2] during which there is the connection condition with the satellite-based capability exposure function, and a geographical location (a longitude interval and a latitude interval) of a satellite node during the time period.

The satellite-based capability exposure function publishes the network capability API to the ground-based capability exposure function, and the connection condition is attached; and the ground-based capability exposure function publishes the network capability API to the satellite-based capability exposure function, and the connection condition is attached. A consistency check of the network capability API is performed by the satellite-based capability exposure function and the ground-based capability exposure function every a configurable T1 time.

The satellite-based capability exposure function publishes the network capability API that is registered locally and the network capability API that is published by the ground-based capability exposure function to the third party application. The third party application obtains the network capability API information and subscribes a satellite-based network capability API and a ground-based network capability API.

The multi-connection terminal reports its GNSS location and a connection capability (including supported connection types and typical connection rates for each supported connection type) to the third party application via the satellite-based capability exposure function. The third party application selects a corresponding service for a user according to the GNSS location and the connection capability of the multi-connection terminal. For example, according to a connection rate of the multi-connection terminal, whether to initiate a multi-party video call or a multi-party audio call is selected.

The third party application invokes a satellite-based network capability via the satellite-based capability exposure function. The satellite-based capability exposure function first checks the connection condition of a relevant network element, and then checks the GNSS location and the connection capability reported by the multi-connection terminal. After the two conditions are met, the satellite-based network capability of the satellite-based core network, the satellite-based network capability of the satellite-based service platform, and the satellite-based network capability of the satellite access network are invoked to establish a communication connection with the multi-connection terminal as needed. The satellite-based capability exposure function returns a capability invoking response to the third party application.

The third party application invokes the ground-based network capability via the satellite-based capability exposure function. The satellite-based capability exposure function checks the GNSS location and the connection capability reported by the multi-connection terminal. After the condition is met, the ground-based network capability is invoked via the ground-based capability exposure function. The satellite-based capability exposure function returns the capability invoking response to the third party application.

In the above solution in the present disclosure, based on a computing capability, a storage capability, a connection capability and a software capability, a self-organizing election method is used to select the most appropriate satellite node to deploy the satellite-based capability exposure function, deploy the satellite-related exposure capability and simplify the exposure interface. Methods of simplifying the exposure interface include assigning default values to parameters of the network capability API and reducing a length of a message header. When the satellite-based capability exposure function entity is proposed in the present disclosure, the capability and the characteristic of the satellite node are fully considered, which reduces the overhead of a network capability API message, and may be applied to the network of fixed, mobile and satellite convergence.

In the above solution in the present disclosure, the satellite access network, the satellite-based service platform, the satellite-based core network support registering their network capabilities and attached connection conditions to the satellite-based capability exposure function. The connection condition is the connection capability at the specified time condition and a specified space condition. That is, based on ephemeris information of the satellite node where the satellite access network is located, the satellite access network provides a time period [t1, t2] during which there is the connection condition with the satellite-based capability exposure function, and a geographical location (a longitude interval and a latitude interval) of the satellite node during the time period. The multi-connection terminal reports its GNSS location and the connection capability (including supported connection types and typical connection rates for each supported connection type) to the satellite-based/ground-based capability exposure function. The above method supports a dynamic network topology, and makes full use of the ephemeris information and the GNSS location to support the dynamic network topology, which realizes the dynamic capability exposure in the network of fixed, mobile and satellite convergence.

In the above solution in the present disclosure, the satellite-based capability exposure function and the ground-based capability exposure function support performing bidirectional capability invoking via an "inter-network capability exposure interface", and support a bidirectional capability publication mechanism, a periodic capability authentication mechanism, and a periodic capability charging mechanism. The support for a heterogeneous capability exposure system is realized by the above method. That is, a capability exposure system of the satellite-based network and a capability exposure system of the ground-based network may adopt different capability exposure frameworks, which may adapt to the resource difference between the satellite-based network and the ground-based network, and reduce the message overhead between capability exposure systems.

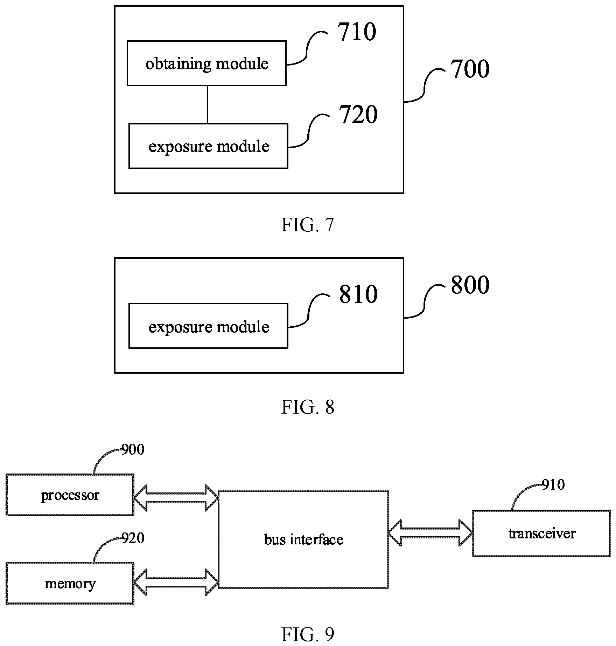

As shown in FIG. 7, the embodiments of the present disclosure provide an apparatus 700 for network capability exposure, applied to a satellite-based capability exposure function entity. The apparatus 700 includes: an obtaining module 710 and an exposure module 720.

The obtaining module 710 is configured to obtain a first network capability and a connection capability of a satellite-related device, in which the satellite-related device includes at least one of a satellite access network, a satellite-based service platform or a satellite-based core network.

The exposure module 720 is configured to publish the first network capability and the connection capability to a ground-based capability exposure function entity, and obtain a second network capability of a satellite-independent device published by the ground-based capability exposure function entity, in which the satellite-independent device includes at least one of a mobile access network, a fixed access network, a ground-based core network or a ground-based service platform.

Optionally, the satellite-based capability exposure function entity is deployed on a target satellite, in which the target satellite is determined based on capability parameters of a plurality of satellites in a target area.

Optionally, the target satellite is determined based on the capability parameters of the plurality of satellites in the target area by:
each of the plurality of satellites in the target area determining a voting value according to respective capability parameters; and
the plurality of satellites in the target area interacting with voting values and determining a satellite with a largest voting value as the target satellite.

Optionally, the satellite-based capability exposure function entity assigns a default value to a parameter of a network capability;
and/or,
a message header of the network capability sent by the satellite-based capability exposure function entity only carries a request method, an API name, and a host name.

Optionally, the apparatus 700 further includes: a first publishing module and/or a forwarding module.

The first publishing module is configured to publish the first network capability and the connection capability to a third party application device.

The forwarding module is configured to receive location information and a connection capability sent by a multi-connection terminal, and send the location information and the connection capability to the third party application device.

Optionally, the apparatus 700 further includes: a first receiving module and a first invoking module.

The first receiving module is configured to receive an invoking request of the first network capability sent by a third party application device.

The first invoking module is configured to, in the case of determining that the satellite-related device and a multi-connection terminal both meet a preset condition according to the invoking request of the first network capability, initiate an invocation of the second network capability, and feed back an invoking response of the first network capability to the third party application device.

Optionally, the apparatus 700 further includes: a second receiving module and a second invoking module.

The second receiving module is configured to receive an invoking request of the second network capability sent by a third party application device.

The second invoking module is configured to, in the case of determining that a multi-connection terminal meets a preset condition according to the invoking request of the second network capability, initiate an invocation of the second network capability to the ground-based capability exposure function entity, and feed back an invoking response of the second network capability to the third party application device.

Optionally, the apparatus 700 further includes: a checking module.

The checking module is configured to perform a consistency check on capability information stored on the satellite-based capability exposure function entity and capability information stored on the ground-based capability exposure function entity every a first time period.

The capability information includes the first network capability, a connection condition and the second network capability.

Optionally, the checking module includes: a receiving unit, a checking unit, and a processing unit.

The receiving unit is configured to receive a consistency check request sent by the ground-based capability exposure function entity, in which the consistency check request carries the capability information stored on the ground-based capability exposure function entity.

The checking unit is configured to determine whether the capability information stored on the ground-based capability exposure function entity is consistent with the capability information stored on the satellite-based capability exposure function entity according to the consistency check request.

The processing unit is configured to update stored capability information and feed back the capability information stored on the satellite-based capability exposure function entity to the ground-based capability exposure function entity in response to the capability information stored on the ground-based capability exposure function entity being not consistent with the capability information stored on the satellite-based capability exposure function entity.

Optionally, the apparatus 700 further includes: a first sending module or an authentication module.

The first sending module is configured to send an authentication request to the ground-based capability exposure function entity every a second time period.

The authentication module is configured to receive an authentication request sent by the ground-based capability exposure function entity and perform an authentication processing on the ground-based capability exposure function entity according to the authentication request.

Optionally, the apparatus 700 further includes: a second sending module or a charging module.

The second sending module is configured to send a charging request to the ground-based capability exposure function entity every a third time period.

The charging module is configured to receive a charging request sent by the ground-based capability exposure function entity and charge the ground-based capability exposure function entity according to the charging request.

The apparatus in the embodiments of the present disclosure may realize each process of the method for network capability exposure on the satellite-based capability exposure function entity side, and may achieve the same technical effect, which is not described here in order to avoid repetition.

As shown in FIG. 8, the embodiments of the present disclosure provide an apparatus 800 for network capability exposure, applied to a ground-based capability exposure function entity. The apparatus 800 includes: an exposure module 810.

The exposure module 810 is configured to receive a first network capability and a connection capability of a satellite-related device published by a satellite-based capability exposure function entity, and publish a second network capability of a satellite-independent device to the satellite-based capability exposure function entity.

The satellite-related device includes at least one of a satellite access network, a satellite-based service platform or a satellite-based core network. The satellite-independent device includes at least one of a mobile access network, a fixed access network, a ground-based core network or a ground-based service platform.

Optionally, the apparatus 800 further includes: a first sending module.

The first sending module is configured to send a consistency check request to the satellite-based capability exposure function entity every a first time period. The consistency check request carries capability information stored on the ground-based capability exposure function entity.

The capability information includes the first network capability, a connection condition and the second network capability.

Optionally, the apparatus 800 further includes: a first receiving module and an updating module.

The first receiving module is configured to receive capability information stored on the satellite-based capability exposure function entity fed back by the satellite-based capability exposure function entity according to the consistency check request.

The updating module is configured to update the capability information stored on the ground-based capability exposure function entity according to the capability information stored on the satellite-based capability exposure function entity.

Optionally, the apparatus 800 further includes: a second sending module or an authentication module.

The second sending module is configured to send an authentication request to the satellite-based capability exposure function entity every a second time period.

The authentication module is configured to receive an authentication request sent by the satellite-based capability exposure function entity and perform an authentication processing on the satellite-based capability exposure function entity according to the authentication request.

Optionally, the apparatus 800 further includes: a third sending module or a charging module.

The third sending module is configured to send a charging request to the satellite-based capability exposure function entity every a third time period.

The charging module is configured to receive a charging request sent by the satellite-based capability exposure function entity and charge the satellite-based capability exposure function entity according to the charging request.

The apparatus in the embodiments of the present disclosure may realize each process of the method for network capability exposure on the ground-based capability exposure function entity side, and may achieve the same technical effect, which is not described here in order to avoid repetition.

The embodiments of the present disclosure further provide a network device, as shown in FIG. 9, including a transceiver 910, a processor 900, a memory 920, and a program or an instruction stored on the memory 920 and capable of running on the processor 900. When the program or the instruction is executed by the processor 900, each process of the method for network capability exposure applied to the satellite-based capability exposure function entity side is implemented, or each process of the method for network capability exposure applied to the ground-based capability exposure function entity side is implemented, which may achieve the same technical effect, and is not described here in order to avoid repetition.

The transceiver 910 is configured to receive and send data under the control of the processor 900.

In FIG. 9, a bus architecture may include any number of interconnected buses and bridges, which are linked together by various circuits of one or more processors represented by the processor 900 and the memory represented by the memory 920. The bus architecture may further link various other circuits together, such as a peripheral device, a voltage regulator, and a power management circuit, which are well known in the art and are therefore not described further in the present disclosure. The bus interface provides an interface. The transceiver 910 may include a plurality of elements, that is, including a transmitter and a receiver, providing units for communication with various other devices on transmission medium. The processor 900 is responsible for the management of the bus architecture and the usual processing, and the memory 920 may store data used by the processor 900 when performing operations.

The embodiments of the present disclosure further provide a readable storage medium on which a program or an instruction is stored. When the program or the instruction is executed by the processor, each process of the method for network capability exposure applied to the satellite-based capability exposure function entity side is implemented, or each process of the method for network capability exposure applied to the ground-based capability exposure function entity side is implemented, which may achieve the same technical effect, and is not described here in order to avoid repetition.

The processor is a processor in the network device in the above embodiments. The readable storage medium includes a computer readable storage medium, such as a computer Read-Only Memory (ROM), a Random Access Memory (RAM), a magnetic disk or an optical disc, and the like.

It should be further noted that the terminal in the specification includes but is not limited to a smartphone, a tablet computer, and the like, and many functional component described here are called modules in order to emphasize the independence of their implementations.

**In** the embodiments of the present disclosure, the module may be implemented by a software so that they may be executed by various types of processors. For example, an identified executable code module may include one or more physical or logical blocks of computer instructions, for example, which may be constructed as an object, a procedure, or a function. Nevertheless, executable codes of an identified module do need not be physically located together, but may be included in different instructions stored in different bits. When the instructions are logically combined, they constitute a module and fulfill the stated purpose of the module.

Practically, the executable code module may be a single instruction or many instructions, and may even be distributed across a plurality of different code segments, distributed across different programs, and distributed across a plurality of memories. Similarly, operational data may be identified within the module and may be implemented in any appropriate form and organized in any appropriate type of data structure. The operational data may be collected as a single data set, or may be distributed in different locations (including on different storage devices), and may exist at least in part only as electronic signals on a system or a network.

**When** the module may be implemented by a software, considering a level of the existing hardware technology, for those skilled in the art, the module that may be implemented by a software may achieve the corresponding functions by building corresponding hardware circuits without considering the cost. The hardware circuit includes a conventional Very Large Scale Integration (VLSI) circuit or a gate array, or an existing semiconductor such as a logic chip and a transistor, or other discrete components. The module may further be realized with a programmable hardware device, such as a field-programmable gate array, a programmable array logic, a programmable logic device, etc.

The above exemplary embodiments are described with reference to the accompanying drawings, and many different forms and embodiments are feasible without deviating from the spirit and instruction of the present disclosure. Therefore, the present disclosure should not be constructed as a limitation of the exemplary embodiments herein. Rather, these exemplary embodiments are provided so that the present disclosure will be thorough and complete, and will communicate the scope of the present disclosure to those skilled in the art. In these drawings, a component size and a relative size may be exaggerated for clarity. The terms used herein are intended to describe specific exemplary embodiments only and are not intended to limit the present disclosure. As used here, the singular forms "a", "one" and "the" are intended to include the plural forms, unless the text clearly indicates otherwise. It will be further understood that when the term "comprise" and/or "include" is used in the specification, it indicates the existence of the feature, integer, step, operation, and component, but do not exclude the existence or addition of one or more other features, integers, steps, operations, components, and/or groups thereof. Unless otherwise indicated, in the description, a range of values includes an upper limit and a lower limit of the range and any subranges in between.

The above are preferred embodiments of the present disclosure. It should be noted that, for those skill in the art, a number of improvements and refinements may be made without deviating from the principle of the present disclosure, and these improvements and refinements shall also be considered as the scope of protection of the present disclosure.

## Claims

1. A method for network capability exposure, applied to a satellite-based capability exposure function entity, comprising:
obtaining a first network capability and a connection capability of a satellite-related device, wherein the satellite-related device comprises at least one of a satellite access network, a satellite-based service platform or a satellite-based core network; and
publishing the first network capability and the connection capability to a ground-based capability exposure function entity, and obtaining a second network capability of a satellite-independent device published by the ground-based capability exposure function entity, wherein the satellite-independent device comprises at least one of a mobile access network, a fixed access network, a ground-based core network or a ground-based service platform.

2. The method of claim 1, wherein the satellite-based capability exposure function entity is deployed on a target satellite, wherein the target satellite is determined based on capability parameters of a plurality of satellites in a target area.

3. The method of claim 2, wherein the target satellite is determined based on the capability parameters of the plurality of satellites in the target area by:
each of the plurality of satellites in the target area determining a voting value according to respective capability parameters; and
the plurality of satellites in the target area interacting with voting values and determining a satellite with a largest voting value as the target satellite.

4. The method of claim 1, wherein the satellite-based capability exposure function entity assigns a default value to a parameter of a network capability; and/or,
a message header of the network capability sent by the satellite-based capability exposure function entity only carries a request method, an application programming interface (API) name, and a host name.

5. The method of claim 1, wherein after obtaining the first network capability and the connection capability of the satellite-related device, the method further comprises:
publishing the first network capability and the connection capability to a third party application device; and/or,
receiving location information and a connection capability sent by a multi-connection terminal, and sending the location information and the connection capability to the third party application device.

6. The method of claim 1, wherein after obtaining the first network capability and the connection capability of the satellite-related device, the method further comprises:
receiving an invoking request of the first network capability sent by a third party application device; and
in the case of determining that the satellite-related device and a multi-connection terminal both meet a preset condition according to the invoking request of the first network capability, initiating an invocation of the second network capability, and feeding back an invoking response of the first network capability to the third party application device.

7. The method of claim 1, wherein after obtaining the second network capability of the satellite-independent device published by the ground-based capability exposure function entity, the method further comprises:
receiving an invoking request of the second network capability sent by a third party application device; and
in the case of determining that a multi-connection terminal meets a preset condition according to the invoking request of the second network capability, initiating an invocation of the second network capability to the ground-based capability exposure function entity, and feeding back an invoking response of the second network capability to the third party application device.

8. The method of claim 1, further comprising:
performing a consistency check on capability information stored on the satellite-based capability exposure function entity and capability information stored on the ground-based capability exposure function entity every a first time period;
wherein the capability information comprises the first network capability, a connection condition and the second network capability.

9. The method of claim 8, wherein performing the consistency check on the capability information stored on the satellite-based capability exposure function entity and the capability information stored on the ground-based capability exposure function entity comprises:
receiving a consistency check request sent by the ground-based capability exposure function entity, wherein the consistency check request carries the capability information stored on the ground-based capability exposure function entity;
determining whether the capability information stored on the ground-based capability exposure function entity is consistent with the capability information stored on the satellite-based capability exposure function entity according to the consistency check request; and
in response to the capability information stored on the ground-based capability exposure function entity being not consistent with the capability information stored on the satellite-based capability exposure function entity, updating stored capability information and feeding back the capability information stored on the satellite-based capability exposure function entity to the ground-based capability exposure function entity.

10. The method of claim 1, further comprising:
sending an authentication request to the ground-based capability exposure function entity every a second time period; or
receiving an authentication request sent by the ground-based capability exposure function entity and performing an authentication processing on the ground-based capability exposure function entity according to the authentication request.

11. The method of claim 1, further comprising:
sending a charging request to the ground-based capability exposure function entity every a third time period; or
receiving a charging request sent by the ground-based capability exposure function entity and charging the ground-based capability exposure function entity according to the charging request.

12. A method for network capability exposure, applied to a ground-based capability exposure function entity, comprising:
receiving a first network capability and a connection capability of a satellite-related device published by a satellite-based capability exposure function entity, and publishing a second network capability of a satellite-independent device to the satellite-based capability exposure function entity;
wherein the satellite-related device comprises at least one of a satellite access network, a satellite-based service platform or a satellite-based core network; and the satellite-independent device comprises at least one of a mobile access network, a fixed access network, a ground-based core network or a ground-based service platform.

13. The method of claim 12, further comprising:
sending a consistency check request to the satellite-based capability exposure function entity every a first time period, wherein the consistency check request carries capability information stored on the ground-based capability exposure function entity;
wherein the capability information comprises the first network capability, a connection condition and the second network capability.

14. The method of claim 13, wherein after sending the consistency check request to the satellite-based capability exposure function entity, the method further comprises:
receiving capability information stored on the satellite-based capability exposure function entity fed back by the satellite-based capability exposure function entity according to the consistency check request; and
updating the capability information stored on the ground-based capability exposure function entity according to the capability information stored on the satellite-based capability exposure function entity.

15. The method of claim 12, further comprising:
sending an authentication request to the satellite-based capability exposure function entity every a second time period; or
receiving an authentication request sent by the satellite-based capability exposure function entity and performing an authentication processing on the satellite-based capability exposure function entity according to the authentication request.

16. The method of claim 12, further comprising:
sending a charging request to the satellite-based capability exposure function entity every a third time period; or
receiving a charging request sent by the satellite-based capability exposure function entity and charging the satellite-based capability exposure function entity according to the charging request.

17. An apparatus for network capability exposure, applied to a satellite-based capability exposure function entity, comprising:
an obtaining module, configured to obtain a first network capability and a connection capability of a satellite-related device, wherein the satellite-related device comprises at least one of a satellite access network, a satellite-based service platform or a satellite-based core network; and
an exposure module, configured to publish the first network capability and the connection capability to a ground-based capability exposure function entity, and obtain a second network capability of a satellite-independent device published by the ground-based capability exposure function entity, wherein the satellite-independent device comprises at least one of a mobile access network, a fixed access network, a ground-based core network or a ground-based service platform.

18. An apparatus for network capability exposure, applied to a ground-based capability exposure function entity, comprising:
an exposure module, configured to receive a first network capability and a connection capability of a satellite-related device published by a satellite-based capability exposure function entity, and publish a second network capability of a satellite-independent device to the satellite-based capability exposure function entity;
wherein the satellite-related device comprises at least one of a satellite access network, a satellite-based service platform or a satellite-based core network; and the satellite-independent device comprises at least one of a mobile access network, a fixed access network, a ground-based core network or a ground-based service platform.

19. A network device, comprising a transceiver, a processor, a memory, and a program or an instruction stored on the memory and capable of running on the processor, wherein when the program or the instruction is executed by the processor, steps in the method for network capability exposure of any one of claims 1 to 11 are implemented, or steps in the method for network capability exposure of any one of claims 12 to 16 are implemented.

20. A readable storage medium on which a program or an instruction is stored which, when executed by a processor, steps in the method for network capability exposure of any one of claims 1 to 11 are implemented, or steps in the method for network capability exposure of any one of claims 12 to 16 are implemented.
